# EUROPEAN PATENT APPLICATION

(11) **EP 3 657 780 A1**
(43) Date of publication of application: **27.05.2020**
(21) Application number: 18843414.6
(22) Date of filing: 06.08.2018
(51) Int. Cl.: H04N 7/15

(54) **VIDEO CONFERENCE MULTIPOINT CONTROL METHOD, DEVICE, STORAGE MEDIUM, AND COMPUTER DEVICE**

(30) Priority: 10.08.2017 CN 201710682422
(71) Applicant: ZTE Corporation, Shenzhen, Guangdong 518057 (CN)
(72) Inventor: PAN, Yunchuan, Shenzhen, Guangdong 518057 (CN)
(74) Representative: Baudler, Ron
(86) International application number: PCT/CN2018/098995
(87) International publication number: WO 2019/029485

(57) **Abstract**

The application provides a video conference multi-point control method and device, a storage medium and a computer apparatus. The method includes: receiving, by a first unitized multi-point control unit (MCU), a conference call request from a terminal through a conference scheduling service, and receiving, by the first unitized MCU, zone information of a zone where the terminal is located, where the zone information is reported by any second unitized MCU in the zone where the terminal is located though a call routing service; selecting, by the first unitized MCU according to the zone information and a preset rule, a third unitized MCU to perform a call control service, and returning an address of the third unitized MCU to the terminal; receiving, by the first unitized MCU, a call request from the terminal for the address of the third unitized MCU, and allocating the third unitized MCU to the terminal; allocating, by the first unitized MCU after receiving a requirement of media processing capability from the terminal, a fourth unitized MCU satisfying the requirement in the zone to the terminal to perform a media processing service for the terminal.

## Description

### TECHNICAL FIELD

The present disclosure relates to, but is not limited to, the field of communications technologies.

### BACKGROUND

A Multi-point Control Unit (MCU) is a network node that controls a multi-point conference system, and is also a key network element that is responsible for signaling access of terminals and synthesis and forwarding of media data, such as audio and video, in a video conference. Compared with a traditional MCU, a MCU of an Internet-based video conference also needs to meet specific requirements of the Internet-based video conference in addition to having functions of the traditional MCU.

In some cases, to complete such a conference, a plurality of unitized MCUs are required to work cooperatively, and here, a mode in which the unitized MCUs are connected together through a certain topological relationship to complete the conference is called cascade.

At present, some manufacturers adopt the cascade mode to solve a problem of conference access, but requirements of configuration and use are high for the user; meanwhile, due to the adoption of the cascade mode, a transmission of media stream must be forwarded among/from the MCUs, and great tests exist on bandwidth use, real-time experience and the like.

### SUMMARY

In an aspect, the present disclosure provides a video conference multi-point control method, including: receiving, by a first unitized multi-point control unit (MCU), a conference call request from a terminal through a conference scheduling service, and receiving, by the first unitized MCU, zone information of a zone where the terminal is located, wherein the zone information is reported by any second unitized MCU in the zone where the terminal is located though a call routing service; selecting, by the first unitized MCU according to the zone information and a preset rule, a third unitized MCU to perform a call control service, and returning an address of the third unitized MCU to the terminal; receiving, by the first unitized MCU, a call request from the terminal for the address of the third unitized MCU, and allocating the third unitized MCU to the terminal; allocating, by the first unitized MCU after receiving a requirement of media processing capability from the terminal, a fourth unitized MCU satisfying the requirement in the zone to the terminal to perform a media processing service for the terminal.

In another aspect, the present disclosure also provides a video conference multi-point control method, including: receiving, by a first unitized multi-point control unit (MCU), a call request from a conference for a terminal through a conference scheduling service, allocating, by the first unitized MCU and in a zone where the terminal is located, a third unitized MCU to the terminal to perform a call control service, and making the third unitized MCU perform signaling interaction with the terminal; allocating, by the first unitized MCU after receiving a requirement of media processing capability from the terminal, a fourth unitized MCU satisfying the requirement in the zone to the terminal to perform a media processing service for the terminal; after the terminal enters the conference, allocating, by the first unitized MCU, a fifth unitized MCU to the conference that the terminal accesses to perform a multi-point conference control service, and allocating, by the first unitized MCU, corresponding sixth unitized MCUs respectively to all zones associated with the conference to perform the conference media service; receiving, by the first unitized MCU, call hang-up information from the terminal, and releasing, by the first unitized MCU, the third unitized MCU and the fourth unitized MCU; and receiving, by the first unitized MCU, a conference end notification, and releasing the fifth unitized MCU and the sixth unitized MCUs.

In another aspect, the present disclosure also provides a video conference multi-point control device, including: a terminal, a registration server and a unitized multi-point control unit (MCU), wherein service functions of the unitized MCU include a conference scheduling service, a call routing service, a call control service for the terminal and a media processing service for the terminal, and the unitized MCU includes a first unitized MCU, a second unitized MCU, a third unitized MCU and a fourth unitized MCU; the first unitized MCU is configured to: receive a conference call request from the terminal through the conference scheduling service, and receive zone information of a zone where the terminal is located, wherein the zone information is reported by any second unitized MCU in the zone where the terminal is located through the call routing service; select, according to the zone information and a preset rule, a third unitized MCU to perform the call control service, and return an address of the third unitized MCU to the terminal; receive a call request from the terminal for the address of the third unitized MCU, and allocate the third unitized MCU to the terminal; and after receiving a requirement of media processing capability from the terminal, allocate a fourth unitized MCU satisfying the requirement in the zone to the terminal to perform the media processing service for the terminal.

In another aspect, the present disclosure also provides a computer-readable storage medium having computer-executable instructions stored thereon that, when executed by a processor, cause the processor to perform one or more of the steps of the video conference multi-point control method described herein.

In another aspect, the present disclosure further provides a computer apparatus including a memory and a processor, the memory having stored therein computer-readable instructions that, when executed by the processor, cause the processor to perform one or more of the steps of the video conference multi-point control method described herein.

### BRIEF DESCRIPTION OF THE DRAWINGS

Fig. 1 is a flowchart of a video conference multi-point control method according to an embodiment of the present disclosure.
Fig. 2 is a flowchart of a video conference multi-point control method according to another embodiment of the present disclosure.
Fig. 3 is a flowchart of a video conference multi-point control method according to yet another embodiment of the present disclosure.
Fig. 4 is a block diagram of a video conference multi-point control device according to an embodiment of the present disclosure.

### DETAILED DESCRIPTION

In order to make the objects, technical solutions and advantages of the present disclosure more clearly, the present disclosure is further described in detail below with reference to the accompanying drawings and embodiments. It should be understood that the specific embodiments described herein are merely illustrative of the disclosure and do not limit the disclosure.

A Multi-point Control Unit (MCU) is a network node that controls a multi-point conference system, and is also a key network element that is responsible for signaling access of terminals and synthesis and forwarding of media data, such as audio and video, in a video conference. Compared with a traditional MCU, a MCU of an Internet-based video conference also needs to meet specific requirements of the Internet-based video conference in addition to having functions of the traditional MCU. Firstly, once the conference is established, it needs to be used anytime and anywhere; secondly, resources are dynamically expanded and contracted, and the resources need to be dynamically allocated to support access terminals regardless of the number of the access terminals; thirdly, because the number of access terminals is uncertain, a large-scale terminal access situation exists (the definition of "large-scale" herein refers to beyond a bearing capability of one traditional multi-point control unit (i.e. MCU)), and meanwhile, a P2P (peer-to-peer) mode cannot be adopted between terminals, that is, each terminal needs to transmit its media stream to other terminals, and in this case, the whole internet cannot bear the required bandwidth. In order to complete such a conference, a plurality of unitized MCUs must be cooperatively operated, and here, a mode in which the plurality of unitized MCUs are connected together through a certain topological relationship to complete the conference is called cascade.

At present, some manufacturers adopt the cascade mode to solve a problem of conference access, but at present, the cascade mode has a problem that cascade relation is set in advance, and the cascade relation cannot be dynamically adjusted according to the actual access condition of the terminals during the conference, so that requirements of configuration and use are high for the user; meanwhile, due to the adoption of the cascade mode, a transmission of the media stream must be forwarded among/from the MCUs, and great tests exist on bandwidth use, real-time experience and the like.

Accordingly, the present disclosure provides, among other things, a video conference multi-point control method and device, storage medium, and computer apparatus that substantially obviate one or more of the problems due to limitations and disadvantages in the related art.

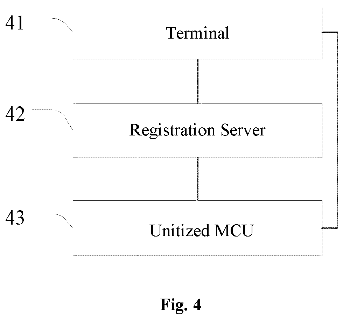

Fig. 4 is a block diagram of a video conference multi-point control device according to an embodiment of the present disclosure. In the present disclosure, as shown in Fig. 4, the Internet-based video conference multi-point control device may include: a terminal 41, a registration server 42, a unitized MCU 43. Here, the unitized MCU 43 refers to a multi-point control unit, and the terminal 41 is a terminal 41 of a video conference. In the present disclosure, the internet is divided into a plurality of zones, and each of the unitized MCU 43 and the terminal 41 may be regarded as an endpoint on the internet; and registering on the registration server 42 is a way that an endpoint (either the terminal 41 or the unitized MCU 43) accesses a zone. The registration process is specified by standard protocols, and after an endpoint advertises its transmission address and alias address to the registration server 42, the registration server 42 may determine a zone that the endpoint accesses through configuration or an auto-discovery process of standard protocol processes. In the present disclosure, all endpoints must register with a particular zone through the registration server 42 before any call begins. In the present disclosure, in a case where the terminal 41 is an H323 video conference terminal, the registration server 42 is a GateKeeper (GK) server; and in a case where the terminal 41 is a Session Initiation Protocol (SIP) video conference terminal, the registration server 42 is an SIP server, which are all standard network elements and will not be described herein again.

In the present disclosure, the unitized MCU 43 represents that each MCU is a complete functional unit, each unitized MCU 43 is deployed in the internet or a local area network, and no matter what networking manner is used, multiple sub-services (service functions) are deployed on the node of each unitized MCU 43, and the unitized MCU 43 may dynamically start the services corresponding to implementations of all the sub-services of the unitized MCU 43 according to dynamic requirements of conference resources, and only needs to start a service program corresponding to the service of the sub-services as required. In an embodiment, the unitized MCU 43 includes, but is not limited to, sub-services such as a conference scheduling service, a call routing service, a call control service for the terminal 41, a multi-point conference control service, a media processing service for the terminal 41, and a conference media service.

It can be understood that the first unitized MCU, the second unitized MCU, the third unitized MCU, the fourth unitized MCU, the fifth unitized MCU, and the sixth unitized MCU in the embodiments of the present disclosure are each the unitized MCU 43, and each unitized MCU 43 may start service programs corresponding to sub-services according to dynamic requirements of the conference. For example, in some embodiments, the first unitized MCU needs to perform the conference scheduling service, the second unitized MCU needs to perform the call routing service, the third unitized MCU needs to perform the call control service, the fourth unitized MCU needs to perform the media processing service for the terminal 41, the fifth unitized MCU needs to perform the multi-point conference control service, and the sixth unitized MCU needs to perform the conference media service. It will be appreciated that, in some embodiments, two or more of the first, second, third, fourth, fifth and sixth unitized MCUs described above may be a same unitized MCU 43, which performs different service functions in different states. After the sub-service of a unitized MCU 43 is started, the sub-service may be cancelled according to the dynamic requirements of conference resources, and in this case, the MCU that generates various corresponding sub-services will be restored to the unitized MCU 43 which may accept next conference scheduling. The unitized MCU 43 may dynamically generate and destroy the corresponding services, and simultaneously, ensures dynamic expansion and contraction of conference resources.

In an embodiment, the unitized MCUs 43 may use, but not limited to, Remote Procedure Call (RPC) or SOCKET to communicate with each other, as long as the communication method meets a message communication requirement across hosts in the internet.

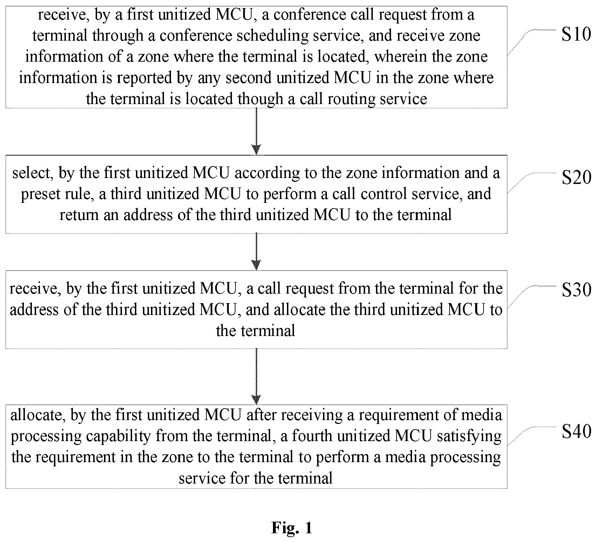

Fig. 1 is a flowchart of a video conference multi-point control method according to an embodiment of the present disclosure. As shown in Figs. 1 and 4, in an embodiment, a video conference multi-point control method is provided, including steps S10 to S40.

In step S10, a first unitized MCU (a unitized MCU 43 that performs the conference scheduling service) receives a conference call request from the terminal 41 through the conference scheduling service, and receives zone information of a zone where the terminal 41 is located. The zone information is reported by any second unitized MCU (a unitized MCU 43 that performs the call routing service) in the zone where the terminal 41 is located though the call routing service. The second unitized MCU is any unitized MCU 43 in the zone found by the registration server 42 according to registration information of the terminal 41. That is, the terminal 41 calls the conference (through a conference number), and in this case, first, the registration server 42 finds any unitized MCU 43 in the same zone according to the registration information of the terminal 41, then starts the call routing service of the unitized MCU 43. Since the first unitized MCU (which may be randomly selected in the zone where the terminal 41 initiating the conference is located, as long as satisfying the requirement of the conference scheduling service) needs to manage and schedule the conference resources of the whole conference, it also receives the zone information of the zone where the terminal 41 is located, which is reported by the second unitized MCU through the call routing service, when receiving the conference call request of the terminal 41. In an embodiment, the registration information of the terminal 41 is registration information after the terminal 41 is registered in the registration server 42 to which the zone belongs, the zone information is registration information of the unitized MCU 43 after the unitized MCU 43 in the zone is registered in the registration server 42 to which the zone belongs, and the registration server 42 is a GK server or a SIP server.

In step S20, the first unitized MCU selects, according to the zone information and a preset rule, a third unitized MCU (a unitized MCU 43 that performs the call control service) to perform the call control service, and returns an address of the third unitized MCU to the terminal 41. That is, in this embodiment, the first unitized MCU determines the third unitized MCU that the terminal 41 should access, and returns, through the second unitized MCU, the address of the third unitized MCU to the registration server 42 and then to the terminal 41. It can be understood that the first unitized MCU, the third unitized MCU, and the second unitized MCU may be different unitized MCUs 43, or may be the same unitized MCU 43 in some cases where the requirements are met.

In step S30, the first unitized MCU receives a call request from the terminal 41 for the address of the third unitized MCU, and allocates the third unitized MCU to the terminal 41. That is, after the terminal 41 calls the address of the third unitized MCU determined in step S20, the conference scheduling MCU of the conference allocates the third unitized MCU to the terminal 41 to perform the call control service for the terminal 41, and allows the third unitized MCU to perform signaling interaction with the terminal 41.

In step S40, after receiving a requirement of media processing capability from the terminal 41, the first unitized MCU allocates a fourth unitized MCU (a unitized MCU 43 that performs the media processing service for the terminal 41) satisfying the requirement in the zone to the terminal 41 to perform the media processing service for the terminal 41. That is, the third unitized MCU performs signaling interaction with the terminal 41, and the terminal 41 transmits a request for a requirement of the media processing capability for the fourth unitized MCU to the first unitized MCU. In this case, the first unitized MCU allocates the fourth unitized MCU meeting the media processing capability to the terminal 41 in the zone where the terminal 41 is located. The third and fourth unitized MCUs may be different unitized MCUs 43, or may be the same unitized MCU 43 in some cases where the requirements are met.

According to the multi-point video conference control method, the unitized MCUs 43 are deployed in a plurality of zones, the zones may be divided by the registration servers 42, each zone is deployed with one registration server 42, and each endpoint (including the terminal 41 and the unitized MCUs 43) registered in the same registration server 42 is automatically divided into endpoint devices in the same zone (that is, both of them locate at the zone). In the present disclosure, how the unitized MCUs 43 (may be simply referred to as nodes) are cascaded (specifically, media cascading) in a conference, that is, how the unitized MCUs 43 are distributed in the zones, is required to consider, from a dynamic perspective, that: whether a call accesses an existing node or a newly allocated node after entering the conference; if the call accesses the existing node, a node of which zone should be accessed; if the call accesses a newly allocated node, from which zone the node should be allocated. The above considerations are relevant to the zone where the terminal 41 is located, the zone where the MCU is located, the network bandwidth between the terminal 41 and the MCU, the network bandwidth between the MCUs, and other factors. In the present disclosure, a video conference is performed by using a mode that each call of the terminal 41 always accesses a node in a zone where the terminal 41 is located, and since bandwidths of the same zone can be guaranteed and are relatively cheap, in the embodiment of the present disclosure, users and zones are divided before networking, and the registration server 42 is deployed in each zone, the above embodiment greatly reduces bandwidth usage between zones.

In the above embodiment, each MCU in the present disclosure is a complete functional unit, and may dynamically generate and perform different service programs; each terminal 41 of the video conference of the present disclosure is allocated with a different unitized MCU 43 (the third unitized MCU) to perform the call control service, so that the call control service for the terminals 41 is distributed, thereby realizing load balancing; meanwhile, each terminal 41 is correspondingly allocated with a unitized MCU 43 (the fourth unitized MCU) to perform the media processing service for the terminal 41, and a plurality of unitized MCUs 43 are used in the present disclosure to cooperatively implement media cascading of the conference. When the Internet-based video conference is carried out, the cascade relation can be dynamically adjusted according to the dynamic access condition of a large number of conference terminals 41, so that the bandwidth used by the system is reduced, and a controllability of delay of the system is ensured.

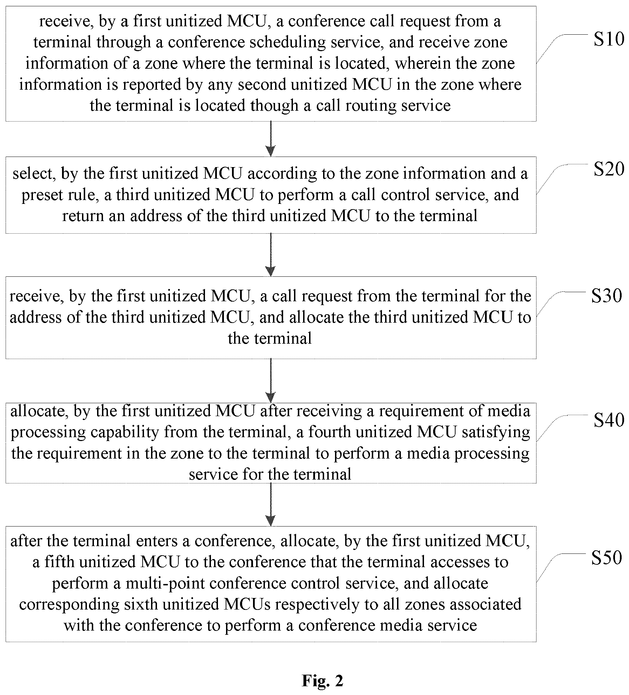

Fig. 2 is a flowchart of a video conference multi-point control method according to another embodiment of the present disclosure. In an embodiment, as shown in Fig. 2, the method includes step S50 in addition to the steps S10 to S40 shown in Fig. 1.

In step S50, after the terminal 41 enters the conference, the first unitized MCU allocates a fifth unitized MCU (a unitized MCU 43 that performs the multi-point conference control service) to the conference that the terminal 41 accesses to perform the multi-point conference control service, and allocates corresponding sixth unitized MCUs (the unitized MCUs 43 that perform the conference media service) respectively to all zones associated with the conference to perform the conference media service. Here, the fifth and sixth unitized MCUs are each a unitized MCU 43, and the service functions of the unitized MCU 43 further include the multi-point conference control service and the conference media service. That is, after at least at one terminal 41 enters the conference, the first unitized MCU starts to allocate the fifth unitized MCU to the conference and allocate the corresponding sixth unitized MCU to each zone participating in the conference. It should be appreciated that, one corresponding sixth unitized MCU is allocated to each zone to perform conference media service, and one fourth unitized MCU which performs the media processing service for the terminal 41 is allocated to each terminal 41.

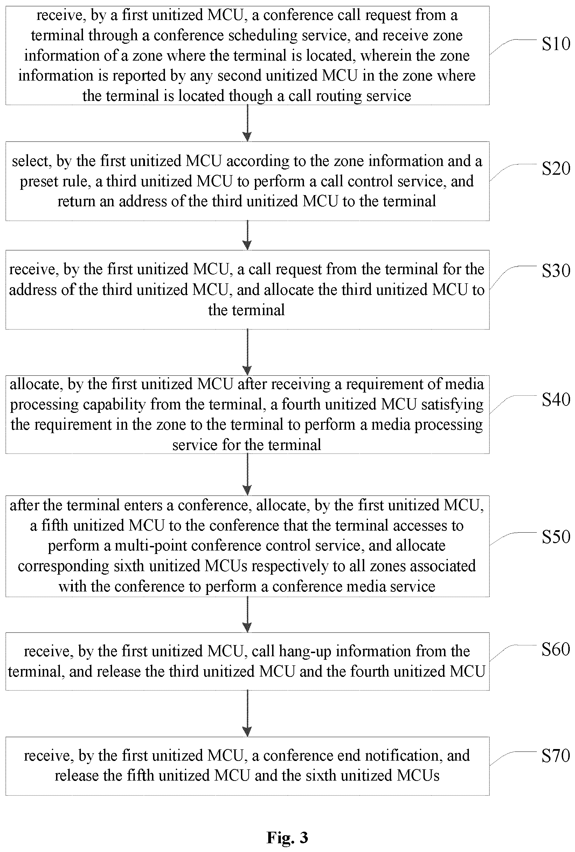

Fig. 3 is a flowchart of a video conference multi-point control method according to yet another embodiment of the present disclosure. In an embodiment, as shown in Fig. 3, in addition to steps S10 to S50 shown in Fig. 2, the method further includes steps S60 and S70.

In step S60, the first unitized MCU receives call hang-up information from the terminal 41, and releases the third unitized MCU and the fourth unitized MCU. That is, after the terminal 41 exits from the conference, the third and fourth unitized MCUs corresponding to the terminal 41 in one to one correspondence are released. In this case, the third and fourth unitized MCUs allocated to the terminal 41 are restored to the unitized MCUs 43 to wait for the next conference scheduling.

In step S70, the first unitized MCU receives a conference end notification, and releases the fifth unitized MCU and the sixth unitized MCUs. That is, after the conference is finished, the fifth and sixth unitized MCUs corresponding to the conference are released. In this case, the fifth and sixth unitized MCUs allocated to the conference are restored to the unitized MCUs 43 to wait for the next conference scheduling.

In an embodiment, the first unitized MCU performing the conference scheduling service, the second unitized MCU reporting the zone information to perform the call routing service, the third unitized MCU performing the call control service for the terminal 41, the fourth unitized MCU performing the media processing service for the terminal 41, the fifth unitized MCU performing multi-point conference control service, and the sixth unitized MCU performing conference media service are each generated from the unitized MCU 43 after the unitized MCU 43 starts a service program that has been deployed in advance according to dynamic requirements for conference resources in the conference. A plurality of sub-services including, but not limited to, the conference scheduling service, the call routing service, the call control service for the terminal 41, the multi-point conference control service, the media processing service for the terminal 41, and the conference media service are deployed in the unitized MCU 43. In an embodiment, the sub-services mainly include the following contents.

Conference scheduling service: the conference scheduling service is configured to manage all resources of the whole conference, including signaling resource, media resource and the like. The conference scheduling service applies for sufficient resources for each conference. In addition, the first unitized MCU corresponding to the conference scheduling service needs to communicate with all the other MCUs in the conference.

Call routing service: the call routing service provides various protocols, and routes the call from the terminal 41 to the conference or from the conference to the terminal 41 to a certain call control service according to a preset rule or randomly, so as to balance the load. The call routing service should support a variety of standard protocols including H323, SIP, etc.

Call control service: each call corresponds to one call control service, each call control service is responsible for media negotiation, channel control, and the like of the call in the current route, and is responsible for connecting the call of the terminal 41 to the multi-point conference control service.

Multi-point conference control service: each multi-point conference control service is responsible for conference control of one conference, and interacts with the call control service, the media processing service for the terminal 41, and the conference media service which access the conference, so as to realize service control of the multi-point conference.

Media processing service for the terminal 41 and conference media service: the media processing service for the terminal 41 and the conference media service include: receiving media data of the terminal 41, forwarding, decoding, synthesizing, encoding, packing, transmitting data among MCUs, etc. The specific service functions including whether to cascade or not are realized by the multi-point conference control service. The media processing service for the terminal 41 and the conference media service are media services having different functions, which may be generated according to actual needs.

In the present disclosure, the sub-services deployed in the unitized MCU 43 are not limited to the above services, and the above sub-services are an abstract division on system functions in the present disclosure. In the present disclosure, the change of contents of the sub-services due to the change of the service names and the change of the number of services, which may be caused by different describing methods, are belongs to the protection scope of the present disclosure.

It can be appreciated that the present disclosure also provides a video conference multi-point control method, the method includes: a first unitized MCU (a unitized MCU 43 performing a conference scheduling service) receives a call request from a conference for a terminal 41 through the conference scheduling service, allocates a third unitized MCU (a unitized MCU 43 performing a call control service) to the terminal 41 in a zone where the terminal 41 is located to perform the call control service, and makes the third unitized MCU perform signaling interaction with the terminal 41; after receiving the requirement of the media processing capability from the terminal 41, the first unitized MCU allocates a fourth unitized MCU (a unitized MCU 43 performing the media processing service for the terminal 41) satisfying the requirement in the zone to the terminal 41 to perform the media processing service for the terminal 41, that is, in this embodiment, when the first unitized MCU receives a call request from a conference for a certain terminal 41, the first unitized MCU allocates the third unitized MCU to the terminal 41 in a zone where the terminal 41 is located, and the third unitized MCU is allowed to perform signaling interaction with the terminal 41. After receiving the requirement of the media processing capability from the terminal 41, the first unitized MCU allocates the fourth unitized MCU in the zone, which meets the requirement of the media processing capability, to the terminal 41. The third and fourth unitized MCUs may be different unitized MCUs 43, or may be the same unitized MCU 43 in some cases where the requirements are met. The subsequent steps of the method of this embodiment are the same as the above steps S50 to S70, that is, after the terminal 41 enters the conference, the first unitized MCU allocates a fifth unitized MCU (a unitized MCU 43 that performs the multi-point conference control service) to the conference that the terminal 41 accesses to perform the multi-point conference control service, and allocates corresponding sixth unitized MCUs (unitized MCUs 43 that perform the conference media service) respectively to all zones associated with the conference to perform the conference media service; the first unitized MCU receives call hang-up information from the terminal 41, and releases the third unitized MCU and the fourth unitized MCU; and the first unitized MCU receives a conference end notification, and releases the fifth unitized MCU and the sixth unitized MCUs.

In an embodiment, each zone is allocated with one sixth unitized MCU, a plurality of terminals 41 are arranged in each zone, each of the plurality of terminal 41 is correspondingly allocated with one fourth unitized MCU, and the fourth unitized MCUs and the sixth unitized MCUs of the plurality of zones work cooperatively. In the present disclosure, the cooperative working process of the fourth unitized MCUs and the sixth unitized MCUs of the plurality of zones is as follows: the terminal 41 is configured to transmit media stream to the fourth unitized MCU corresponding to the terminal 41 in a network packing manner, wherein the media stream includes audio and video; the fourth unitized MCU is configured to encode the media stream when receiving the media stream and then transmit the encoded media stream to the sixth unitized MCU in the local zone; the sixth unitized MCU is configured to forward the encoded media stream to the sixth unitized MCU in the zone where the demand terminal 41 is located according to view demand of the demand terminal 41 of the conference, and the encoded media stream is transmitted to the demand terminal 41 after the encoded media stream is re-encoded by the third unitized MCU in the zone where the demand terminal 41 is located. It can be seen from the method in the above embodiment that calls are distributed to different nodes to make call control distributed, and for conference service processing, a centralized processing mode is adopted. Call control between conferences and conference control cooperation between a master conference and a slave conference in a traditional cascade mode are avoided by centralized conference service, so that implementation of multi-point conference control service is simplified, additional burden caused by signaling forwarding is also reduced, and the consumption of signaling control in the conference is relatively limited regardless of the number of terminals 41.

In an actual usage scenario of a video conference, different pictures selected and viewed by the terminals 41 in all conference places are generally not more than 2 pictures (one from the broadcasting end and one from the selected viewing end, the broadcasting end is defined as a terminals 41 which is viewed by all other terminals except the broadcasting source, and the selected viewing end is a terminal 41 of the broadcasting source), so that a pressure of forwarding the conference media is not large, the above solution is completely feasible in the actual usage scenario of the video conference. The forwarding hierarchy is not more than 2 tiers while the dynamic access requirement of the large number of conference terminals 41 is met, so that the system delay is also effectively controlled. Meanwhile, since all of the encoding and decoding are performed in the fourth unitized MCUs (unitized MCUs 43 that perform the media processing service for the terminal 41) associated with the respective terminals 41, and the fourth unitized MCUs have already realized load balancing in the above embodiment, the system can effectively realize elastic expansion and contraction. Therefore, by adopting the method disclosed by the present disclosure, the effects of elastic expansion and contraction and dynamic expansion are achieved, the bandwidth is saved, and the user experience is improved.

In an embodiment, as shown in Fig. 4, a video conference multi-point control device is provided. The video conference multi-point control device may include: a terminal 41, a registration server 42 and a unitized MCU 43. The service functions of the unitized MCU 43 include a conference scheduling service, a call routing service, a call control service for the terminal 41 and a media processing service for the terminal 41, and the unitized MCU 43 includes a first unitized MCU, a second unitized MCU, a third unitized MCU and a fourth unitized MCU, that is, the first unitized MCU, the second unitized MCU, the third unitized MCU and the fourth unitized MCU are all unitized MCUs 43.

The first unitized MCU is configured to: receive a conference call request from the terminal 41 through the conference scheduling service, and receive zone information of a zone where the terminal 41 is located, wherein the zone information is reported by any second unitized MCU of the zone where the terminal 41 is located through the call routing service; select, according to the zone information and a preset rule, a third unitized MCU to perform the call control service, and return an address of the third unitized MCU to the terminal 41; receive a call request from the terminal 41 for the address of the third unitized MCU, and allocate the third unitized MCU to the terminal 41; and after receiving a requirement of media processing capability from the terminal 41, allocate a fourth unitized MCU satisfying the requirement in the zone to the terminal 41 to perform the media processing service for the terminal 41.

In an embodiment, the first unitized MCU is further configured to: after the terminal 41 enters the conference, allocate a fifth unitized MCU to the conference that terminal 41 accesses to perform a multi-point conference control service, and allocate corresponding sixth unitized MCUs respectively to all zones associated with the conference to perform a conference media service. Here, the fifth and sixth unitized MCUs are each a unitized MCU 43, and the service functions of the unitized MCU 43 further include the multi-point conference control service and the conference media service.

In an embodiment, the first unitized MCU is further configured to: receive call hang-up information from the terminal 41, and release the third unitized MCU and the fourth unitized MCU; and receive a conference end notification, and release the fifth unitized MCU and the sixth unitized MCUs.

In an embodiment, the terminal 41 is configured to transmit media stream to the fourth unitized MCU corresponding to the terminal 41 in a network packing manner, wherein the media stream includes audio and video; the fourth unitized MCU is configured to encode the media stream when receiving the media stream and then transmit the encoded media stream to the sixth unitized MCU in the local zone; the sixth unitized MCU is configured to forward the encoded media stream to the sixth unitized MCU in the zone where the demand terminal 41 is located according to view demand of the demand terminal 41 of the conference, and the encoded media stream is transmitted to the demand terminal 41 after the encoded media stream is re-encoded by the third unitized MCU in the zone where the demand terminal 41 is located.

In an embodiment, the first unitized MCU is further configured to: receive a call request from a conference for a terminal 41 through the conference scheduling service, allocate a third unitized MCU to the terminal 41 in a zone where the terminal 41 is located to perform the call control service, and make the third unitized MCU perform signaling interaction with the terminal 41; after receiving the requirement of the media processing capability from the terminal 41, allocate a fourth unitized MCU satisfying the requirement in the zone to the terminal 41 to perform the media processing service for the terminal 41; after the terminal 41 enters the conference, allocate a fifth unitized MCU to the conference that the terminal 41 accesses to perform the multi-point conference control service, and allocate corresponding sixth unitized MCUs respectively to all zones associated with the conference to perform the conference media service; receive call hang-up information from the terminal 41, and release the third unitized MCU and the fourth unitized MCU; and receive a conference end notification, and release the fifth unitized MCU and the sixth unitized MCUs.

According to the multi-point video conference control device in the above embodiment, a video conference is performed by using a mode that each call of the terminal 41 always accesses a node in a zone where the terminal 41 is located, and since bandwidths of the same zone can be guaranteed and are relatively cheap, users and zones are divided before networking, and the registration server 42 is deployed in each zone, the above embodiment greatly reduces bandwidth usage between zones. Meanwhile, each MCU in the present disclosure is a complete functional unit, and may dynamically generate and perform different service programs; each terminal 41 of the video conference of the present disclosure is allocated with a different unitized MCU 43 (the third unitized MCU) to perform the call control service, so that the call control service for the terminals 41 is distributed, thereby realizing load balancing; meanwhile, each terminal 41 is correspondingly allocated with a unitized MCU 43 (the fourth unitized MCU) to perform the media processing service for the terminal 41, and a plurality of unitized MCUs 43 are used in the present disclosure to cooperatively implement media cascading of the conference. When the Internet-based video conference is carried out, the cascade relation can be dynamically adjusted according to the dynamic access condition of a large number of conference terminals 41, so that the bandwidth used by the system is reduced, and a controllability of the delay of the system is ensured.

In an embodiment, there is also provided a computer-readable storage medium having computer-executable instructions stored thereon that, when executed by a processor, cause the processor to perform the steps of: receiving a conference call request from the terminal 41 through the conference scheduling service, and receiving zone information of a zone where the terminal 41 is located, wherein the zone information is reported by any second unitized MCU of the zone where the terminal 41 is located through the call routing service; selecting, according to the zone information and a preset rule, a third unitized MCU to perform the call control service, and returning an address of the third unitized MCU to the terminal 41; receiving a call request from the terminal 41 for the address of the third unitized MCU, and allocating the third unitized MCU to the terminal 41; and after receiving a requirement of media processing capability from the terminal 41, allocating a fourth unitized MCU satisfying the requirement in the zone to the terminal 41 to perform the media processing service for the terminal 41.

In an embodiment, the computer-executable instructions, when executed by the processor, further cause the processor to perform the steps of: after the terminal 41 enters the conference, allocating a fifth unitized MCU to the conference that the terminal 41 accesses to perform a multi-point conference control service, and allocating corresponding sixth unitized MCUs respectively to all zones associated with the conference to perform a conference media service. Here, the fifth and sixth unitized MCUs are each a unitized MCU 43, and the service functions of the unitized MCU 43 further include the multi-point conference control service and the conference media service.

In an embodiment, the computer-executable instructions, when executed by the processor, further cause the processor to perform the steps of: receiving call hang-up information from the terminal 41, and releasing the third unitized MCU and the fourth unitized MCU; and receiving a conference end notification, and releasing the fifth unitized MCU and the sixth unitized MCUs.

In an embodiment, the computer-executable instructions, when executed by the processor, further cause the processor to perform the steps of: receiving a call request from a conference for a terminal 41 through the conference scheduling service, allocating a third unitized MCU to the terminal 41 in a zone where the terminal 41 is located to perform the call control service, and making the third unitized MCU perform signaling interaction with the terminal 41; after receiving the requirement of the media processing capability from the terminal 41, allocating a fourth unitized MCU satisfying the requirement in the zone to the terminal 41 to perform the media processing service for the terminal 41; after the terminal 41 enters the conference, allocating a fifth unitized MCU to the conference that the terminal 41 accesses to perform the multi-point conference control service, and allocating corresponding sixth unitized MCUs respectively to all zones associated with the conference to perform the conference media service; receiving call hang-up information from the terminal 41, and releasing the third unitized MCU and the fourth unitized MCU; and receiving a conference end notification, and releasing the fifth unitized MCU and the sixth unitized MCUs.

In an embodiment, the computer-executable instructions, when executed by the processor, further cause the processor to perform the steps of: transmitting media stream to the fourth unitized MCU corresponding to the terminal 41 in a network packing manner, wherein the media stream includes audio and video; encoding the media stream when receiving the media stream and then transmitting the encoded media stream to the sixth unitized MCU in the local zone; forwarding the encoded media stream to the sixth unitized MCU in the zone where the demand terminal 41 is located according to view demand of the demand terminal 41 of the conference, and transmitting the encoded media stream to the demand terminal 41 after the encoded media stream is re-encoded by the third unitized MCU in the zone where the demand terminal 41 is located.

According to the computer-readable storage medium, each MCU is a complete functional unit, and may dynamically generate and perform different service programs; each terminal 41 of the video conference of the present disclosure is allocated with a different unitized MCU 43 (the third unitized MCU) to perform the call control service, so that the call control service for the terminals 41 is distributed, thereby realizing load balancing; meanwhile, each terminal 41 is correspondingly allocated with a unitized MCU 43 (the fourth unitized MCU) to perform the media processing service for the terminal 41, and a plurality of unitized MCUs 43 are used in the present disclosure to cooperatively implement media cascading of the conference. When the Internet-based video conference is carried out, the cascade relation can be dynamically adjusted according to the dynamic access condition of a large number of conference terminals 41, so that the bandwidth used by the system is reduced, and a controllability of the delay of the system is ensured.

In an embodiment, there is also provided a computer apparatus including a memory and a processor, the memory having stored therein computer-readable instructions that, when executed by the processor, cause the processor to perform the steps of: receiving a conference call request from the terminal 41 through the conference scheduling service, and receiving zone information of a zone where the terminal 41 is located, wherein the zone information is reported by any second unitized MCU of the zone where the terminal 41 is located through the call routing service; selecting, according to the zone information and a preset rule, a third unitized MCU to perform the call control service, and returning an address of the third unitized MCU to the terminal 41; receiving a call request from the terminal 41 for the address of the third unitized MCU, and allocating the third unitized MCU to the terminal 41; and after receiving a requirement of media processing capability from the terminal 41, allocating a fourth unitized MCU satisfying the requirement in the zone to the terminal 41 to perform the media processing service for the terminal 41.

In an embodiment, the computer-readable instructions, when executed by the processor, further cause the processor to perform the steps of: after the terminal 41 enters the conference, allocating a fifth unitized MCU to the conference that the terminal 41 accesses to perform a multi-point conference control service, and allocating corresponding sixth unitized MCUs respectively to all zones associated with the conference to perform a conference media service. Here, the fifth and sixth unitized MCUs are each a unitized MCU 43, and the service functions of the unitized MCU 43 further include the multi-point conference control service and the conference media service.

In an embodiment, the computer-readable instructions, when executed by the processor, further cause the processor to perform the steps of: receiving call hang-up information from the terminal 41, and releasing the third unitized MCU and the fourth unitized MCU; and receiving a conference end notification, and releasing the fifth unitized MCU and the sixth unitized MCUs.

In an embodiment, the computer-readable instructions, when executed by the processor, further cause the processor to perform the steps of: receiving a call request from a conference for a terminal 41 through the conference scheduling service, allocating a third unitized MCU to the terminal 41 in a zone where the terminal 41 is located to perform the call control service, and making the third unitized MCU perform signaling interaction with the terminal 41; after receiving the requirement of the media processing capability from the terminal 41, allocating a fourth unitized MCU satisfying the requirement in the zone to the terminal 41 to perform the media processing service for the terminal 41; after the terminal 41 enters the conference, allocating a fifth unitized MCU to the conference that the terminal 41 accesses to perform the multi-point conference control service, and allocating corresponding sixth unitized MCUs respectively to all zones associated with the conference to perform the conference media service; receiving call hang-up information from the terminal 41, and releasing the third unitized MCU and the fourth unitized MCU; and receiving a conference end notification, and releasing the fifth unitized MCU and the sixth unitized MCU.

In an embodiment, the computer-readable instructions, when executed by the processor, further cause the processor to perform the steps of: transmitting media stream to the fourth unitized MCU corresponding to the terminal 41 in a network packing manner, wherein the media stream includes audio and video; encoding the media stream when receiving the media stream and then transmitting the encoded media stream to the sixth unitized MCU in the local zone; forwarding the encoded media stream to the sixth unitized MCU in the zone where the demand terminal 41 is located according to view demand of the demand terminal 41 of the conference, and transmitting the encoded media stream to the demand terminal 41 after the encoded media stream is re-encoded by the third unitized MCU in the zone where the demand terminal 41 is located.

According to the computer apparatus, each MCU is a complete functional unit, and may dynamically generate and perform different service programs; each terminal 41 of the video conference of the present disclosure is allocated with a different unitized MCU 43 (the third unitized MCU) to perform the call control service, so that the call control service for the terminals 41 is distributed, thereby realizing load balancing; meanwhile, each terminal 41 is correspondingly allocated with a unitized MCU 43 (the fourth unitized MCU) to perform the media processing service for the terminal 41, and a plurality of unitized MCUs 43 are used in the present disclosure to cooperatively implement media cascading of the conference. When the Internet-based video conference is carried out, the cascade relation can be dynamically adjusted according to the dynamic access condition of a large number of conference terminals 41, so that the bandwidth used by the system is reduced, and a controllability of the delay of the system is ensured.

It will be understood by those skilled in the art that all or part of the processes in the methods of the embodiments described above may be implemented by a computer program instructing related hardware, the program may be stored in a computer-readable storage medium, and in the embodiments of the present disclosure, the program may be stored in the storage medium of a computer system and executed by at least one processor in the computer system to implement the processes of the methods in the embodiments described above. The storage medium may be a magnetic disk, an optical disk, a Read-Only Memory (ROM), a Random Access Memory (RAM), or the like.

The technical features of the above embodiments may be arbitrarily combined, and all possible combinations of the technical features of the above embodiments are not described for the sake of brevity, but should be considered as within the scope of the present disclosure as long as there is no contradiction between the technical features in the combination.

The above-mentioned embodiments only illustrate several implementations of the present disclosure, and the description thereof is specific and detailed, but is not to be understood as limiting the scope of the patent disclosure. It should be noted that various changes and modifications can be made by one skilled in the art without departing from the spirit of the present disclosure, and these changes and modifications are all within the scope of the disclosure. Therefore, the protection scope of the present disclosure should be subject to the appended claims.

## Claims

1. A video conference multi-point control method, comprising:
receiving, by a first unitized multi-point control unit (MCU), a conference call request from a terminal through a conference scheduling service, and receiving, by the first unitized MCU, zone information of a zone where the terminal is located, wherein the zone information is reported by any second unitized MCU in the zone where the terminal is located though a call routing service;
selecting, by the first unitized MCU according to the zone information and a preset rule, a third unitized MCU to perform a call control service, and returning an address of the third unitized MCU to the terminal;
receiving, by the first unitized MCU, a call request from the terminal for the address of the third unitized MCU, and allocating the third unitized MCU to the terminal; and
allocating, by the first unitized MCU after receiving a requirement of media processing capability from the terminal, a fourth unitized MCU satisfying the requirement in the zone to the terminal to perform a media processing service for the terminal.

2. The method of claim 1, further comprising:
after the terminal enters a conference, allocating, by the first unitized MCU, a fifth unitized MCU to the conference that the terminal accesses to perform a multi-point conference control service, and allocating, by the first unitized MCU, corresponding sixth unitized MCUs respectively to all zones associated with the conference to perform a conference media service.

3. The method of claim 2, further comprising:
receiving, by the first unitized MCU, call hang-up information from the terminal, and releasing, by the first unitized MCU, the third unitized MCU and the fourth unitized MCU; and
receiving, by the first unitized MCU, a conference end notification, and releasing, by the first unitized MCU, the fifth unitized MCU and the sixth unitized MCUs.

4. The method of claim 1, wherein registration information of the terminal is registration information after the terminal is registered in a registration server to which the zone belongs;
the zone information is registration information of a unitized MCU in the zone after the unitized MCU is registered in the registration server to which the zone belongs; and
the registration server is a gatekeeper server or a session initiation protocol server.

5. A video conference multi-point control method, comprising:
receiving, by a first unitized multi-point control unit (MCU), a call request from a conference for a terminal through a conference scheduling service, allocating, by the first unitized MCU and in a zone where the terminal is located, a third unitized MCU to the terminal to perform a call control service, and making the third unitized MCU perform signaling interaction with the terminal;
allocating, by the first unitized MCU after receiving a requirement of media processing capability from the terminal, a fourth unitized MCU satisfying the requirement in the zone to the terminal to perform a media processing service for the terminal;
after the terminal enters the conference, allocating, by the first unitized MCU, a fifth unitized MCU to the conference that the terminal accesses to perform a multi-point conference control service, and allocating, by the first unitized MCU, corresponding sixth unitized MCUs respectively to all zones associated with the conference to perform the conference media service;
receiving, by the first unitized MCU, call hang-up information from the terminal, and releasing, by the first unitized MCU, the third unitized MCU and the fourth unitized MCU; and
receiving, by the first unitized MCU, a conference end notification, and releasing the fifth unitized MCU and the sixth unitized MCUs.

6. A video conference multi-point control device, comprising: a terminal, a registration server and a unitized multi-point control unit (MCU), wherein service functions of the unitized MCU comprise a conference scheduling service, a call routing service, a call control service for the terminal and a media processing service for the terminal, and the unitized MCU comprises a first unitized MCU, a second unitized MCU, a third unitized MCU and a fourth unitized MCU;
the first unitized MCU is configured to:
receive a conference call request from the terminal through the conference scheduling service, and receive zone information of a zone where the terminal is located, wherein the zone information is reported by any second unitized MCU of the zone where the terminal is located through the call routing service;
select, according to the zone information and a preset rule, a third unitized MCU to perform the call control service, and return an address of the third unitized MCU to the terminal;
receive a call request from the terminal for the address of the third unitized MCU, and allocate the third unitized MCU to the terminal; and
after receiving a requirement of media processing capability from the terminal, allocate a fourth unitized MCU satisfying the requirement in the zone to the terminal to perform the media processing service for the terminal.

7. The device of claim 6, wherein the first unitized MCU is further configured to:
after the terminal enters a conference, allocate a fifth unitized MCU to the conference that the terminal accesses to perform a multi-point conference control service, and
allocate corresponding sixth unitized MCUs respectively to all zones associated with the conference to perform a conference media service;
wherein the fifth unitized MCU and the sixth unitized MCUs are each a unitized MCU, and the service functions of the unitized MCU further comprises the multi-point conference control service and the conference media service.

8. The device of claim 7, wherein the first unitized MCU is further configured to:
receive call hang-up information from the terminal, and release the third unitized MCU and the fourth unitized MCU; and
receive a conference end notification, and release the fifth unitized MCU and the sixth unitized MCUs.

9. The device of claim 7, wherein the terminal is configured to transmit media stream to the fourth unitized MCU corresponding to the terminal in a network packing manner, wherein the media stream comprises audio and video;
the fourth unitized MCU is configured to encode the media stream when receiving the media stream and then transmit the encoded media stream to a sixth unitized MCU in the zone; and
the sixth unitized MCU is configured to forward the encoded media stream to a sixth unitized MCU in a zone where a demand terminal is located according to view demand of the demand terminal of the conference, and the encoded media stream is transmitted to the demand terminal after the encoded media stream is re-encoded by a third unitized MCU in the zone where the demand terminal is located.

10. The device of claim 6, wherein the first unitized MCU is further configured to:
receive a call request from a conference for the terminal through the conference scheduling service, allocate the third unitized MCU to the terminal in the zone where the terminal is located to perform the call control service, and make the third unitized MCU perform signaling interaction with the terminal;
after receiving the requirement of the media processing capability from the terminal, allocate the fourth unitized MCU satisfying the requirement in the zone to the terminal to perform the media processing service for the terminal;
after the terminal enters the conference, allocate a fifth unitized MCU to the conference that the terminal accesses to perform a multi-point conference control service, and allocate corresponding sixth unitized MCUs respectively to all zones associated with the conference to perform a conference media service;
receive call hang-up information from the terminal, and release the third unitized MCU and the fourth unitized MCU; and
receive a conference end notification, and release the fifth unitized MCU and the sixth unitized MCUs.

11. A computer-readable storage medium having computer-executable instructions stored thereon that, when executed by a processor, cause the processor to perform the steps of the method of any one of claims 1 to 5.

12. A computer apparatus comprising a memory and a processor, the memory having stored therein computer-readable instructions that, when executed by the processor, cause the processor to perform the steps of the method of any one of claims 1 to 5.
